# EUROPEAN PATENT SPECIFICATION

(11) **EP 2 842 191 B1**
(45) Date of publication and mention of the grant of the patent: **07.02.2018**
(21) Application number: 12724349.1
(22) Date of filing: 24.04.2012
(51) Int. Cl.: H01M 8/0662, H01M 8/04089, H01M 8/0432, H01M 8/0438, H01M 8/0444, H01M 8/04537

(54) **METHOD AND ARRANGEMENT FOR DETERMINING ENTHALPY CHANGE OF A FUEL CELL SYSTEM**
VERFAHREN UND ANORDNUNG ZUR BESTIMMUNG DES ENTHALPIEWECHSELS EINES BRENNSTOFFZELLENSYSTEMS
PROCÉDÉ ET SYSTÈME PERMETTANT DE DÉTERMINER LE CHANGEMENT D'ENTHALPIE D'UN SYSTÈME DE PILE À COMBUSTIBLE

(43) Date of publication of application: 04.03.2015
(73) Proprietor: Convion Oy, 02150 Espoo (FI)
(72) Inventor: ÅSTRÖM, Kim, FI-02460 Kirkkonummi (FI); HAKALA, Tuomas, FI-00330 Helsinki (FI); HOTTINEN, Tero, FI-08680 Lohja (FI); KORHONEN, Topi, FI-02750 Espoo (FI)
(74) Representative: LEITZINGER OY
(86) International application number: PCT/FI2012/050407
(87) International publication number: WO 2013/160522

(56) References cited:
- JP-A- 2005 200 260
- US-A1- 2005 123 813

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed.
Fuel cells, by means of which energy of fuel, for example blogas, Is directly converted to electricity via a chemical reaction in an environmentally friendly process, are promising future energy conversion devices.

### The state of the art

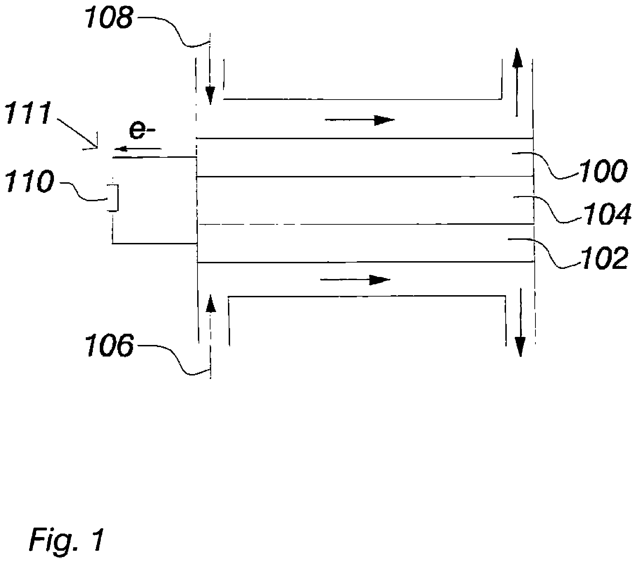

Fuel cell, as presented in fig 1, comprises an anode side 100 and a cathode side 102 and an electrolyte material 104 between them. In solid oxide fuel cells (SOFCs) oxygen 106 is fed to the cathode side 102 and it is reduced to a negative oxygen Ion by receiving electrons from the cathode. The negative oxygen ion goes through the electrolyte material 104 to the anode side 100 where it reacts with fuel 108 producing water and also typically carbon dioxide (CO2). Between anode 100 and cathode 102 is an external electric circuit 111 comprising a load 110 for the fuel cell.

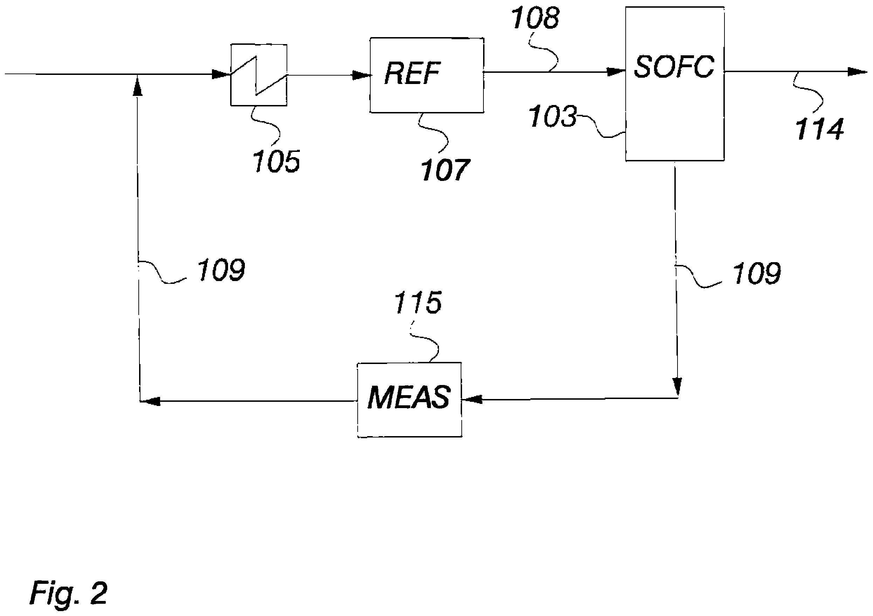

In figure 2 is presented a SOFC device as an example of a high temperature fuel cell device. SOFC device can utilize as fuel for example natural gas, bio gas, methanol or other compounds containing hydrocarbons. SOFC device in figure 2 comprises more than one, typically plural of fuel cells In stack formation 103 (SOFC stack). Each fuel cell comprises anode 100 and cathode 102 structure as presented in figure 1. Part of the used fuel can be recirculated in feedback arrangement 109 through each anode. SOFC device In fig 2 also comprises fuel heat exchanger 105 and reformer 107. Typically several heat exchangers are used for controlling thermal conditions at different locations In a fuel cell process. Reformer 107 is a device that converts the fuel such as for example natural gas to a composition suitable for fuel cells, for example to a composition containing hydrogen and methane, carbon dioxide, carbon monoxide and inert gases. Anyway in each SOFC device It is though not necessary to have a reformer.

By using measurement means 115 (such as fuel flow meter, current meter and temperature meter) necessary measurements are carried out for the operation of the SOFC device. Part of the gas used at anodes 100 may be recirculated through anodes in feedback arrangement 109 and the other part of the gas is exhausted 114 from the anodes 100.

A solid oxide fuel cell (SOFC) device Is an electrochemical conversion device that produces electricity directly from oxidizing fuel. Advantages of SOFC device include high efficiencies, long term stability, low emissions, and cost. The main disadvantage is the high operating temperature which results in long start up and shutdown times and in both mechanical and chemical compatibility issues.

Natural gases such as methane and gases containing higher carbon compounds are typically used as fuels In SOFCs, which gases, however, have to be preprocessed before feeding to the fuel cells to prevent coking, I.e. formation of harmful carbon compounds such as for example coke. These different forms of carbon can be in this context called as general term being harmful carbon compounds. Hydrocarbons go through a thermal or catalytic decomposition in the formation of harmful carbon compounds. The produced compound can adhere to the surfaces of the fuel cell device and adsorbs on catalysts, such as nickel particles. The harmful carbon compound produced in the coking coats some of the active surface of the fuel cell device, thus significantly deteriorating the reactivity of the fuel cell process. The harmful carbon compounds may even completely block the fuel passage.

Preventing formation of harmful carbon compounds is, therefore, important for ensuring a long service life for the fuel cells. The prevention of formation of harmful carbon compounds also saves catalysts that are the substances (nickel, platinum, etc) used In fuel cells for accelerating chemical reactions. Gas pre-processing requires water, which is supplied to the fuel cell device. The water produced in combining the oxygen ion and the fuel, i.e. the gas on the anode 100 side, can also be used in the pre-processing of the gas.

The single pass SOFC fuel utilization (FU) and oxygen-to-carbon ratio (OC) are critical parameters in SOFC system control. Exceeding the limit values for FU and OC increase the degradation and/or damage immediately the SOFC system e.g. by coking. However, small safety margins are desirable for FU and OC to maximize system efficiency, reduce unnecessary high fuel recycling and reduce unnecessary steam flow to fuel system.

To determine FU and OC accurately in process control, the hydrocarbon (such as methane, CH4, and higher hydrocarbons) concentrations In fuel needs to be known. Especially in certain blogas applications this is problematic since CH4 concentration can vary quite a lot, but accurate on-line CH4 concentration measurement devices are too expensive for commercial SOFC systems. Similarly in natural gases the amount of CH4 and also that of higher hydrocarbons may vary, causing a similar problem. In one prior art embodiment type, which is in use e.g. in Wartsila New Energy unit running on a landfill gas, the measured variation of CH4 fraction in the fuel has been 30-45 %. The accuracy of a suitable and adequately inexpensive CH4 measurement device is typically only 4 %-units since the calibration tends to drift during usage. The 4 %-unit error in CH4 concentration as such means about 10 %-unit error in calculated FU (fuel utilization).
In prior art document JP2005200260 (A) is presented a hydrogen production apparatus that is capable of manufacturing hydrogen from different kind of raw material compositions and to also provide a fuel cell power generation system with the same.
Also in prior art embodiments is required substantially high accuracy and reliability of fuel feed-in flow and fuel composition monitoring. These high requirements have been fulfilled only with complicated and expensive measurement and monitoring device.

### Short description of the invention

The object of the invention is to accomplish a fuel cell system, where is utilized determination of exhaust gas enthalpy change to minimize requirements on measurement and control of fuel feed-in. This is achieved by a fuel cell system according to claim 1. This fuel cell system comprises an arrangement for determining residual enthalpy change of a fuel cell system, each fuel cell in the fuel cell system comprising an anode side, a cathode side, and an electrolyte between the anode side and the cathode side, and the fuel cell system comprising means for feeding fuel to the fuel cell system, means for obtaining a fuel cell current value and an afterburner for performing burning of residual gas from the anode side. The arrangement comprises means for measuring temperature before and after the afterburner to form afterburner temperature difference, means for determining the consumed fuel amount in the fuel cells on the basis of the fuel cell 30 current value, means for determining the air amount in the afterburner, means for determining residual enthalpy change over the afterburner on the basis of said afterburner temperature difference, said air amount in the afterburner, and on the basis of said consumed fuel amount in the fuel cells, and means for obtaining at least one of fuel input enthalpy and fuel input concentration on the basis of the determined residual enthalpy change, said means being configured to determine methane content of the fuel feed by utilizing said obtained at least one of fuel input enthalpy and fuel input concentration.

The focus of the invention is also a method, in which fuel is fed to the fuel cell system, is obtained a fuel cell current value, and is burnt residual gas from the anode side in an afterburner. In the method Is measured temperature before and after the afterburner to form afterburner temperature difference, is determined the consumed fuel amount in the fuel cells on the basis of the fuel cell current value, is determined the air amount In the afterburner, is determined residual enthalpy change over the afterburner on the basis of said afterburner temperature difference, of said air amount in the afterburner, and on the basis of said consumed fuel amount in the fuel cells, is obtained at least one of fuel input enthalpy and fuel input concentration on the basis of the determined residual enthalpy change, and is determined methane content information of the fuel feed by utilizing said obtained at least one of fuel input enthalpy and fuel input concentration. The invention is based on determination of residual enthalpy change information on the basis of the afterburner temperature Information, and on controlling at least one of fuel utilization (FU) and oxygen to carbon (O/C) ratio in the fuel feed of the fuel cell system on the basis of the determined residual enthalpy change Information. In the Invention is utilized a phenomena that a small error factor in the fuel feed-in causes even a multiplied error factor In residual enthalpy Information of the afterburner, for example a 5 % error in the fuel feed-in can cause a 20 % change In residual enthalpy information. Thus said change information of residual enthalpy, formed according to the present Invention, gives relatively clear indication of a control need In fuel feed-in, and this is utilized in the present invention.

The benefit of the invention Is that cost effective measurement technology can be utilized for controlling at least one of fuel utilization (FU) and oxygen to carbon (O/C) ratio in the fuel feed of the fuel cell system.

### Short description of figures

- Figure 1: presents a single fuel cell structure.
- Figure 2: presents an example of a SOFC device.
- Figure 3: presents an arrangement according to the present invention in a fuel cell system.
- Figure 4: presents a preferred microcalorimeter setup according to the present invention.
- Figure 5: presents examples of sensitivity measurement results in an embodiment according to the invention.

### Detailed description of the invention

Solid oxide fuel cells (SOFCs) can have multiple geometries. The planar geometry (Fig 1) is the typical sandwich type geometry employed by most types of fuel cells, where the electrolyte 104 is sandwiched In between the electrodes, anode 100 and cathode 102. SOFCs can also be made in tubular geometries where for example either air or fuel is passed through the inside of the tube and the other gas is passed along the outside of the tube. This can be also arranged so that the gas used as fuel is passed through the Inside of the tube and air is passed along the outside of the tube. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach a very high temperature and as a consequence of this the stacks have to be heated at temperatures ranging from 600 to 1,000 °C. Reduction of oxygen 106 (Fig. 1) into oxygen Ions occurs at the cathode 102. These ions can then be transferred through the solid oxide electrolyte 104 to the anode 100 where they can electrochemically oxidize the gas used as fuel 108. In this reaction, water and carbon dioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane and some amounts of higher hydrocarbons), different biogases (mainly nitrogen and/or carbon dioxide diluted methane), and other higher hydrocarbon containing fuels, including alcohols. Methane and higher hydrocarbons need to be reformed either in the reformer 107 (Fig 2) before entering the fuel cell stacks 103 or (partially) internally within the stacks 103. The reforming reactions require certain amount of water, and additional water is also needed to prevent possible carbon formation, i.e. coking caused by higher hydrocarbons. This water can be provided internally by circulating the anode gas exhaust flow, because water Is produced In excess amounts in fuel cell reactions, and/or said water can be provided with an auxiliary water feed (e.g. direct fresh water feed or circulation of exhaust condensate). By anode recirculation arrangement also part of the unused fuel and dilutants in anode gas are fed back to the process, whereas in auxiliary water feed arrangement only additive to the process is water.

In embodiments according to the present invention a change In enthalpy of remaining fuel gas coming from anode can be utilized to detect changes in the enthalpy of fuel feed-in. These enthalpy changes may rise from changes e.g. in gas composition or flow sensor drifting. The anode exhaust's enthalpy change can be rather easily monitored by the temperature change over after burner if the afterburner unit Is situated as a separate component whose air flow can be controlled. If the after burner unit is situated in the down-stream of the stacks in a way that whole air flow is fed through it, then the enthalpy change may be monitored with adequate accuracy by sampling a small portion of the anode exhaust gas. This could be accomplished e.g. with a microcalorimeter setup presented in attached schematic, where an ejector sucks the required flows into the catalyst chamber, miniature catalyst burns the sampled fuel, and based on known ejector flow properties and measured pressure level of the afterburner and temperature change, the change in enthalpy of remaining fuel can be calculated. Based on sensitivity calculations, the method according to the present invention allows significant decrease In required accuracy of feed-in flow and composition information. Furthermore in some advanced future embodiments need of feed-in flow and/or composition Information can be even totally avoided.

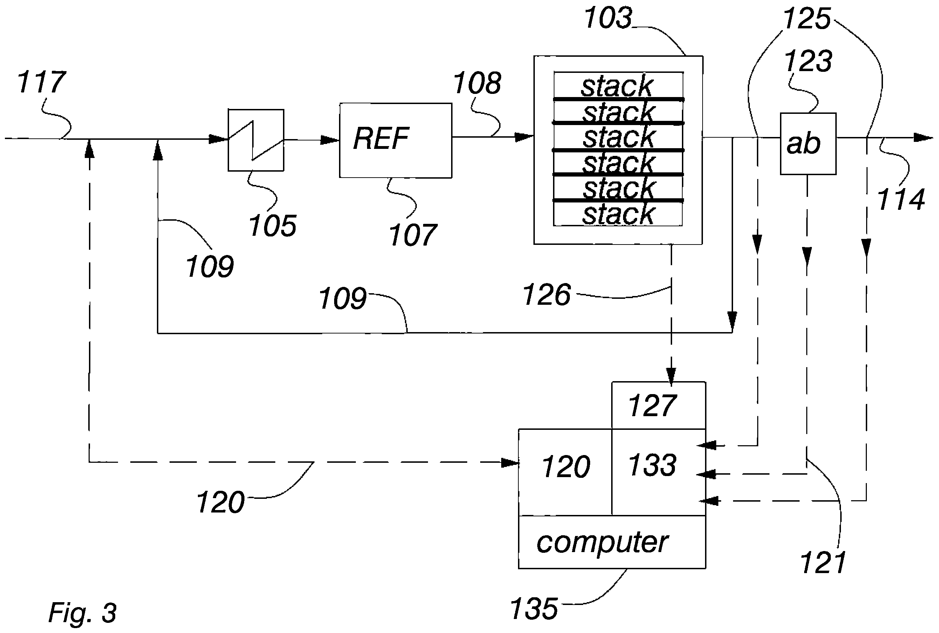

In figure 3 is presented an arrangement according to the present invention for determining residual enthalpy change of a fuel cell system, which comprises means 117 for feeding fuel to the fuel cell system and means 109 for performing anode side 100 recirculation 109 of the gas used as fuel. The means 117 can be arranged for example by prior art fuel feed system comprising a fuel source and a pipe line through which fuel is fed into the fuel cell system. The means 109 are not necessary in Implementing the arrangement and method according to the invention, i.e. the present invention can also be Implemented and utilized in a fuel cell system, which does not comprise recirculation of the anode side 100 gas. The fuel cell system comprises an afterburner 123 for performing burning of residual gas from the anode sides 100, i.e. in figure 3 the fuel cell system comprises an afterburner 123 for performing burning of residual gas from the anode side recirculation 109. Anyway, said residual gas need not be from the anode side recirculation, but it can be directly from the anode sides 100 of the fuel cells 103. The fuel cell system also comprises means 126 for obtaining fuel cell current Information 103. This preferably means total current information of all fuel cell stacks 103.

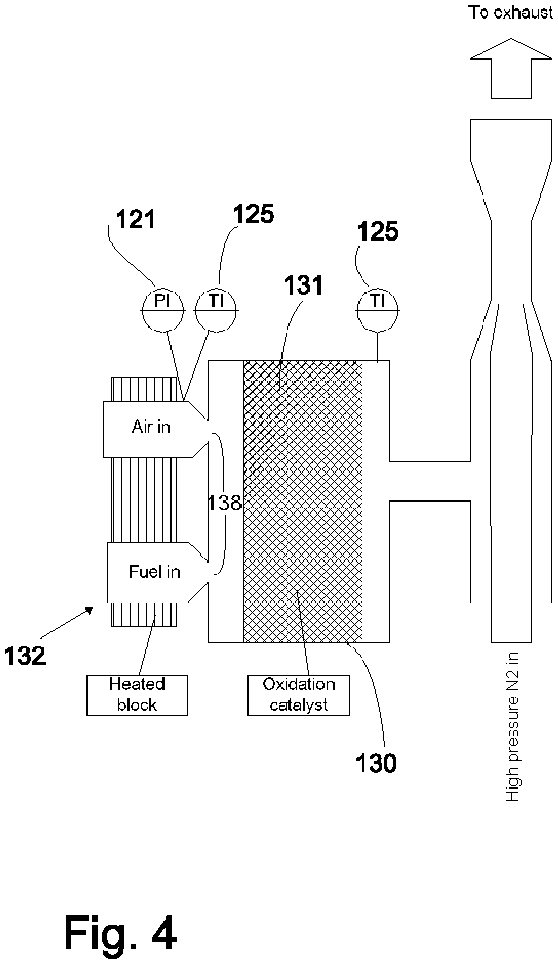

The arrangement according to the present invention comprises means 125 for measuring temperature from the gas flow preferably just before the afterburner 123 and just after the afterburner 123, as the figure 3 schematically shows. Afterburner temperature information is formed from said temperature measurements, and on the basis of said temperature Information can be calculated afterburner temperature change information. The arrangement comprises means 127 for determining information on burnt, I.e. consumed fuel amount in the fuel cells 103 on the basis of said formed current information. The means 127 are preferably processor means locating for example In a computer unit 135, which Is presented in figure 3. The arrangement further comprises means for determining information on air amount in the afterburner 123. For example, when an ejector Is used for air feed In to the afterburner said air amount Information can be determined on the basis of ejector nozzle 138 (Fig. 4) diameter information for example in a processor based calculation in the computer unit 135.

Means 133 of the present invention are for determining residual enthalpy change information on the basis of said afterburner temperature change information, said information on air amount in the afterburner, and on the basis of said Information on consumed fuel amount In the fuel cells 103. The arrangement further comprises means 120 for obtaining at least one of fuel input enthalpy Information and fuel input concentration information on the basis of the determined residual enthalpy change information. The means 120 utilize the obtained fuel Input enthalpy information and/or the obtained fuel input concentration information to control at least one of fuel utilization (FU) and oxygen to carbon (O/C) ratio In the fuel feed of the fuel cell system. The arrangement can be configured to determine more adjusted methane content information of the fuel feed (117) by the means (120) for a more accurate control of at least one of fuel utilization (FU) and oxygen to carbon ratio (O/C) In the fuel cell system. The controlling of at least one of fuel utilization (FU) and oxygen to carbon ratio (O/C) is performed for example so that the means 120 give a control command via a control line 120 (wired or wireless), and the fuel cell system changes at least one of its operation factors (air amount, water amount, temperature, fuel cell voltage, etc) according to the control command.

The fuel cell system presented in figure 3 also comprises means 121 for measuring afterburner 123 pressure to form pressure level information of the afterburner. Pressure level information is useful in some preferred embodiments of the Invention, but it is not necessary in Implementing the arrangement and method according to the Invention.

In figure 4 is presented a preferred microcalorimeter setup according to the present invention as the means 133 for determining residual enthalpy change information. The microcalorimeter setup comprises an at least one ejector 132 for sucking, by achieving required pressure state over at least one critical opening 138, a required gas flow from the anode side 100 gas flow into a catalyst chamber 130, and also a required air flow from an air source into said catalyst chamber 130, to form a gas sample. Oxidant is also sucked into the catalyst chamber 130 in a known, i.e. determined, proportion to the gas sample flow. The ejector 132 comprises an ejector nozzle 138, i.e. a critical opening 138 through which said required gas amount flows, and preferably the ejector 132 comprises also another critical opening 138 through which said required air amount flows. When a diameter of the critical opening is measured (or known for example from the manufacturer), flow volume through the critical opening can be determined, and thus the required amount of air, I.e. oxidant, and the required amount of gas can be dispensed by the ejector by the determined, i.e. known, proportion. The gas sample and oxidant are reacted in a miniature catalyst 131 of the microcalorimeter. The means 133 (figure 3) comprise a processor unit 133 for calculating residual enthalpy change information of the residual gas from the anode side 100 gas based on known ejector 132 flow properties, I.e. known or measured diameter information of the at least one critical opening 138, and afterburner temperature change information according to the preferred embodiment of figure 4. Also afterburner 123 pressure level information can be measured by the means 121 (fig. 3) and said information utilized in the calculation of the residual enthalpy change information.

Instead of the ejector 132 in the embodiments according to the invention can be also utilized for example a venture or an orifice plate on the basis of their known flow restrictions.

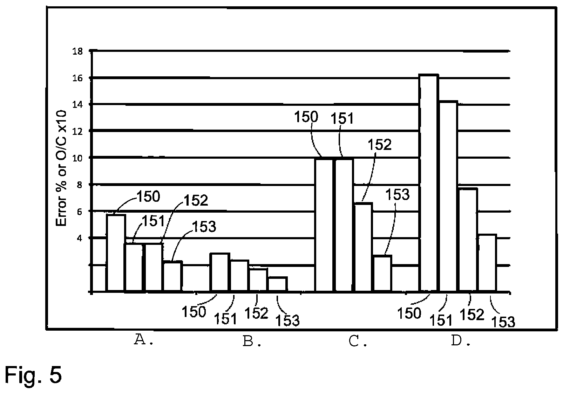

In figure 5 is presents examples of sensitivity measurement results in an embodiment according to the invention. Case A shows recycle ratio error percents, case B shows O/C*10 results, case C shows system fuel utilization results, and case D shows single pass fuel utilization results. Reference sign 150 refers to a situation where there exists no residual enthalpy correction with fuel cell system leakage errors. Reference sign 151 refers to a situation where there exists no residual enthalpy correction, and also no fuel cell system leakage errors. Reference sign 152 refers to a situation where there exists residual enthalpy correction with fuel cell system leakage errors. Reference sign 153 refers to a situation where there exists residual enthalpy correction, and no fuel cell system leakage errors. These diagrams shows for example that worst case errors in critical control factors can be even eliminated -50% compared to prior art system, when there exists considerable leakage errors in the fuel cell system. Also when there exists no uncertainty in leakage values, said elimination can be about -30%.

The means 127, 133 and 120 are preferably implemented by a calculative program used In at least one digital processor and the means 127, 133 and 120 can be located for example in a same computer 135 (Fig. 3), which comprises said at least one digital processor. The means 126 for obtaining fuel cell current information (103) are implemented for example by some prior art current or voltage measuring device.

The means 125 for measuring temperature are Implemented for example by some prior art temperature measuring device, which form afterburner 123 temperature change information, which preferably comprises temperature rise information as said temperature change information from a substantially complete burning process of the afterburner. In forming of the afterburner temperature change information is preferably utilized air amount Information and/or fuel volume flow Information, which are provided for example by some prior art air amount and/or fuel flow measurement method and device. The afterburner temperature change information can also be formed from temperature information provided by sampling arrangement measurements, such as the described microcalorimeter setup.

A heat loss estimation model can be incorporated in the enthalpy change calculations to account for characterized heat loss to surroundings or known systematic error of temperature information. Correction terms for the calculations can be derived for example by using a calibrated methane measurement device for the fuel inlet or by accurate gas analysis of the fuel entering the burner or calorimeter.

Although the Invention has been presented in reference to the attached figures and specification, the invention is by no means limited to those as the Invention is subject to variations within the scope allowed for by the claims.

## Claims

1. A fuel cell system, wherein each fuel cell in the fuel cell system comprises an anode side (100), a cathode side (102), and an electrolyte (104) between the anode side and the cathode side, and the fuel cell system comprising means (117) for feeding fuel to the fuel cell system, means (126) for obtaining a fuel cell current value (103), and an afterburner (123) for performing burning of residual gas from the anode side (100), **characterized by**, that the arrangement comprises means (125) for measuring temperature before and after the afterburner (123) to form afterburner temperature difference, means (127) for determining the fuel amount consumed in the fuel cells (103) on the basis of the fuel cell current value, means for determining the air amount in the afterburner (123), means (133) for determining the residual enthalpy change over the afterburner on the basis of said afterburner temperature difference, of said air amount in the afterburner, and on the basis of said fuel amount consumed in the fuel cells, and means (120) for obtaining at least one of fuel input enthalpy and fuel input concentration on the basis of the determined residual enthalpy change, said means (120) being configured to determine methane content of the fuel feed (117) by utilizing said obtained at least one of fuel input enthalpy and fuel input concentration.

2. A fuel cell system in accordance with claim 1, **characterized by**, that the means (120) are adapted to utilize the obtained fuel input enthalpy and/or the obtained fuel input concentration to control of at least one of fuel utilization (FU) and oxygen to carbon ratio (O/C) in the fuel feed.

3. A fuel cell system in accordance with claim 1, **characterized by**, that the means (133) for determining the residual enthalpy change comprises a microcalorimeter setup, which comprises at least one ejector (132) for sucking required gas flow from the residual gas from the anode side (100) and required air flow into a catalyst chamber (130) to form a gas sample, and a miniature catalyst (131) for burning the gas sample, and the means (133) comprise a processor unit (133) for calculating the residual enthalpy change of the residual gas from the anode side based on known gas and air flow proportions, and the afterburner temperature difference.

4. A fuel cell system in accordance with claim 1, **characterized by**, that the fuel cell system comprises means (109) for performing anode side recirculation (109) of the gas used as fuel.

5. A method of determining methane content in the fuel fed to a fuel cell system, in which method is fed fuel to the fuel cell system, is obtained fuel cell current value , and is burnt residual gas from the anode side (100) in an afterburner (123), **characterized by**, that in the method is measured temperature before and after the afterburner (123) to form afterburner temperature difference , is determined the fuel amount consumed in the fuel cells (103) on the basis of the fuel cell current value , is determined the air amount in the afterburner (123), is determined the residual enthalpy change over the afterburner on the basis of said afterburner temperature difference, of said air amount in the afterburner, and on the basis of said fuel amount consumed in the fuel cells, is obtained at least one of fuel input enthalpy and fuel input concentration on the basis of the determined residual enthalpy change, and is determined methane content of the fuel feed (117) by utilizing said obtained at least one of fuel input enthalpy and fuel input concentration.

6. A method of determining methane content in the fuel fed to a fuel cell system in accordance with claim 5, **characterized by**, that in the method is utilized the obtained fuel input enthalpy and/or the obtained fuel input concentration to control of at least one of fuel utilization (FU) and oxygen to carbon ratio (O/C) in the fuel feed.

7. A method of determining methane content in the fuel fed to a fuel cell system in accordance with claim 5, **characterized by**, that in the method is determined the residual enthalpy change by sucking required gas flow from the residual gas from the anode side (100) for forming a gas sample, said gas sample being burnt after said forming, and the residual enthalpy change of the residual gas from the anode side is calculated based on known restrictions, and the afterburner temperature difference.

8. A method of determining methane content in the fuel fed to a fuel cell system in accordance with claim 5, **characterized by**, that in the method is performed anode side recirculation (109) of the gas used as fuel.

## Patentansprüche

1. Brennstoffzellensystem, wobei jede Brennstoffzelle im Brennstoffzellensystem eine Anodenseite (100), eine Katodenseite (102) und einen Elektrolyten (104) zwischen der Anodenseite und der Katodenseite umfasst, und wobei das Brennstoffzellensystem Mittel (117) zur Zufuhr von Brennstoff zum Brennstoffzellensystem, Mittel (126) zum Gewinnen eines Brennstoffzellenstromwertes (103) und einen Nachbrenner (123) zum Ausführen des Verbrennens von Restgas von der Anodenseite (100) umfasst, **dadurch gekennzeichnet, dass** die Anordnung Mittel (125) zum Messen der Temperatur vor und nach dem Nachbrenner (123) umfasst, um eine Nachbrenner-Temperaturdifferenz zu bilden, Mittel (127) zum Bestimmen der Brennstoffmenge, die in den Brennstoffzellen (103) auf der Basis des Brennstoffzellen-Stromwertes verbraucht wurde, Mittel zum Bestimmen der Luftmenge im Nachbrenner (123), Mittel (133) zum Bestimmen der Restenthalpieänderung über dem Nachbrenner auf der Basis der Nachbrenner-Temperaturdifferenz der Luftmenge im Nachbrenner und auf der Basis der Brennstoffmenge, die in den Brennstoffzellen verbraucht wurde, und Mittel (120) zum Gewinnen von mindestens einer Brennstoff-Eingangsenthalpie und Brennstoff-Eingangskonzentration auf der Basis der festgestellten restlichen Enthalpieänderung, wobei das Mittel (120) dafür ausgelegt ist, den Methangehalt der Brennstoffzufuhr (117) durch Nutzen der erhaltenen mindestens einen Größe aus Brennstoff-Eingangsenthalpie und Brennstoff-Eingangskonzentration zu bestimmen.

2. Brennstoffzellensystem nach Anspruch 1, **dadurch gekennzeichnet, dass** das Mittel (120) dafür ausgelegt ist, die erhaltene Brennstoff-Eingangsenthalpie und/oder die erhaltene Brennstoff-Eingangskonzentration zu nutzen, um mindestens eine Größe aus der Brennstoffnutzung (FU) und dem Sauerstoff-Kohlenstoff-Verhältnis (0/C) in der Brennstoffzufuhr zu steuern.

3. Brennstoffzellensystem nach Anspruch 1, **dadurch gekennzeichnet, dass** das Mittel (133) zum Bestimmen der restlichen Enthalpieänderung eine Mikrokalorimeter-Installation umfasst, die mindestens einen Ejektor (132) zum Saugen von erforderlichem Gasstrom aus dem Restgas von der Anodenseite (100) und von erforderlichem Luftstrom in eine Katalysatorkammer (130) umfasst, um eine Gasprobe zu bilden, und einen Miniaturkatalysator (131) zum Verbrennen der Gasprobe, und das Mittel (133) umfasst eine Prozessoreinheit (133) zum Berechnen der Rest-Enthalpieänderung des Restgases von der Anodenseite auf der Basis von bekannten Gas- und Luftstromanteilen und der Nachbrenner-Temperaturdifferenz.

4. Brennstoffzellensystem nach Anspruch 1, **dadurch gekennzeichnet, dass** das Brennstoffzellensystem Mittel (109) zum Ausführen der anodenseitigen Rückführung (109) des Gases umfasst, das als Brennstoff verwendet wird.

5. Verfahren zum Bestimmen des Methangehaltes im Brennstoff, der einem Brennstoffzellensystem zugeführt wird, wobei bei dem Verfahren Brennstoff dem Brennstoffzellensystem zugeführt wird, ein Brennstoffzellen-Stromwert erhalten wird und Restgas von der Anodenseite (100) in einem Nachbrenner (123) verbrannt wird, **dadurch gekennzeichnet, dass** bei dem Verfahren die Temperatur vor und hinter dem Nachbrenner (123) gemessen wird, um eine Nachbrenner-Temperaturdifferenz zu bilden, die Brennstoffmenge, die in den Brennstoffzellen (103) verbraucht wird, wird auf der Basis des Brennstoffzellen-Stromwertes bestimmt, die Luftmenge im Nachbrenner (123) wird bestimmt, die Rest-Enthalpieänderung über dem Nachbrenner wird auf der Basis der Nachbrenner-Temperaturdifferenz bestimmt, und aus der Luftmenge im Nachbrenner und auf der Basis der Brennstoffmenge, die in den Brennstoffzellen verbraucht wurde, wird mindestens eine Größe aus der Brennstoff-Eingangsenthalpie und der Brennstoff-Eingangskonzentration auf der Basis der bestimmten Rest-Enthalpieänderung gewonnen, und es wird der Methangehalt der Brennstoffzufuhr (117) durch Nutzen von mindestens einer Größe aus der erhaltenen Brennstoff-Eingangsenthalpie und der erhaltenen Brennstoff-Eingangskonzentration bestimmt.

6. Verfahren zum Bestimmen des Methangehaltes im Brennstoff, der einem Brennstoffzellensystem zugeführt wird, nach Anspruch 5, **dadurch gekennzeichnet, dass** bei dem Verfahren die erhaltene Brennstoff-Eingangsenthalpie und/oder die erhaltene Brennstoff-Eingangskonzentration genutzt wird, um mindestens eine Größe aus der Brennstoffnutzung (FU) und dem Sauerstoff-Kohlenstoff-Verhältnis (O/C) in der Brennstoffzufuhr zu steuern.

7. Verfahren zum Bestimmen des Methangehaltes im Brennstoff, der einem Brennstoffzellensystem zugeführt wird, nach Anspruch 5, **dadurch gekennzeichnet, dass** bei dem Verfahren die Rest-Enthalpieänderung durch Ansaugen des erforderlichen Gasstroms aus dem Restgas von der Anodenseite (100) zum Bilden einer Gasprobe bestimmt wird, die Gasprobe nach dem Bilden verbrannt wird und die Rest-Enthalpieänderung des Restgases von der Anodenseite auf der Basis bekannter Beschränkungen und der Nachbrenner-Temperaturdifferenz berechnet wird.

8. Verfahren zum Bestimmen des Methangehaltes im Brennstoff, der einem Brennstoffzellensystem zugeführt wird, nach Anspruch 5, **dadurch gekennzeichnet, dass** bei dem Verfahren die anodenseitige Rückführung (109) des Gases ausgeführt wird, das als Brennstoff verwendet wird.

## Revendications

1. Système de pile à combustible, dans lequel chaque pile à combustible dans le système de pile à combustible comprend un côté d'anode (100), un côté de cathode (102) et un électrolyte (104) entre le côté d'anode et le côté de cathode, et le système de pile à combustible comprenant un moyen (117) pour alimenter du combustible vers le système de pile à combustible, un moyen (126) pour obtenir une valeur de courant de pile à combustible (103), et un brûleur post-combustion (123) pour brûler les gaz résiduels du côté d'anode (100), **caractérisé en ce que** l'agencement comprend un moyen (125) pour mesurer la température avant et après le brûleur post-combustion (123) pour former la différence de température de brûleur post-combustion, un moyen (127) pour déterminer la quantité de combustible brûlée dans les piles à combustible (103) en se basant sur la valeur de courant de pile à combustible, un moyen pour déterminer la quantité d'air dans le brûleur post-combustion (123), un moyen (133) pour déterminer le changement d'enthalpie résiduelle sur le brûleur post-combustion en se basant sur ladite différence de température de brûleur post-combustion, ladite quantité d'air dans le brûleur post-combustion et en se basant sur ladite quantité de combustible consumée dans les piles à combustible, et un moyen (120) pour obtenir au moins une de l'enthalpie d'entrée du combustible et de la concentration d'entrée du combustible en se basant sur le changement d'enthalpie résiduelle déterminé, ledit moyen (120) étant configuré pour déterminer la teneur en méthane de l'alimentation en combustible (117) en utilisant lesdites au moins une enthalpie d'entrée du combustible et concentration d'entrée du combustible obtenues.

2. Système de pile à combustible selon la revendication 1, **caractérisé en ce que** le moyen (120) est adapté pour utiliser l'enthalpie d'entrée du combustible obtenue et/ou la concentration d'entrée du combustible obtenue pour contrôler au moins un de l'utilisation de combustible (FU) et du rapport oxygène/carbone (O/C) dans l'alimentation en combustible.

3. Système de pile à combustible selon la revendication 1, **caractérisé en ce que** le moyen (133) pour déterminer le changement d'enthalpie résiduelle comprend un réglage de microcalorimètre qui comprend au moins un éjecteur (132) pour aspirer le flux de gaz requis du gaz résiduel depuis le côté d'anode (100) et le flux d'air requis dans une chambre de catalyseur (130) pour former un échantillon gazeux, et un catalyseur miniature (131) pour brûler l'échantillon gazeux, et le moyen (133) comprend une unité de processeur (133) pour calculer le changement d'enthalpie résiduelle du gaz résiduel depuis le côté d'anode en se basant sur les proportions connues de flux de gaz et d'air, et la différence de température de brûleur post-combustion.

4. Système de pile à combustible selon la revendication 1, **caractérisé en ce que** le système de pile à combustible comprend un moyen (109) pour effectuer la recirculation (109) côté d'anode du gaz utilisé en tant que combustible.

5. Procédé de détermination de la teneur en méthane dans le combustible alimenté dans un système de pile à combustible, dans lequel procédé, du combustible est alimenté vers le système de pile à combustible, une valeur de courant de pile à combustible est obtenue, et du gaz résiduel venant du côté d'anode (100) est brûlé dans un brûleur post-combustion (123), **caractérisé en ce que** dans le procédé, la température avant et après le brûleur post-combustion (123) est mesurée pour former une différence de température de brûleur post-combustion, la quantité de combustible consumée dans les piles à combustible (103) est déterminée en se basant sur la valeur de courant de pile à combustible, la quantité d'air dans le brûleur post-combustion (123) est déterminée, le changement d'enthalpie résiduel sur le brûleur post-combustion est calculé en se basant sur ladite différence de température de brûleur post-combustion, ladite quantité d'air dans le brûleur post-combustion, et en se basant sur ladite quantité de combustible consumée dans les piles à combustible, au moins l'une de l'enthalpie d'entrée du combustible et de la concentration d'entrée du combustible est obtenue en se basant sur le changement d'enthalpie résiduelle déterminé, et la teneur en méthane de l'alimentation en méthane (117) est déterminée en utilisant ladite au moins une enthalpie d'entrée du combustible et concentration d'entrée du combustible obtenues.

6. Procédé de détermination de la teneur en méthane dans le combustible alimenté vers un système de pile à combustible selon la revendication 5, **caractérisé en ce que** dans le procédé, l'enthalpie d'entrée du combustible obtenue et/ou la concentration d'entrée du combustible obtenue est/sont utilisée(s) pour commander au moins un de l'utilisation de combustible (FU) et du rapport oxygène/carbone (O/C) dans l'alimentation en combustible.

7. Procédé de détermination de la teneur en méthane dans le combustible alimenté vers un système de pile à combustible selon la revendication 5, **caractérisé en ce que** dans le procédé, le changement d'enthalpie résiduelle est déterminé par aspiration du flux de gaz requis venant du gaz résiduel du côté d'anode (100) pour former un échantillon gazeux, ledit échantillon gazeux étant brûlé après ladite formation, et le changement d'enthalpie résiduelle du gaz résiduel du côté d'anode est calculé en se basant sur des restrictions connues et la différence de température de brûleur post-combustion.

8. Procédé de détermination de la teneur en méthane dans le combustible alimenté vers un système de pile à combustible selon la revendication 5, **caractérisé en ce que** dans le procédé, une recirculation (109) côté d'anode du gaz utilisé en tant que combustible est effectuée.
